Europäisches Patentamt

European Patent Office

Office européen des brevets

(11) Veröffentlichungsnummer: **0 379 615**
**A1**

(12) **EUROPÄISCHE PATENTANMELDUNG**

(21) Anmeldenummer: 89101239.5

(51) Int. Cl.5: **F16K 31/53**

(22) Anmeldetag: 25.01.89

(43) Veröffentlichungstag der Anmeldung:
**01.08.90 Patentblatt 90/31**

(84) Benannte Vertragsstaaten:
**AT BE CH DE ES FR GB IT LI NL SE**

(71) Anmelder: **VIA Gesellschaft für
Verfahrenstechnik mbH
Heerdter Lohweg 63-71
D-4000 Düsseldorf 11(DE)**

(72) Erfinder: **Lukoschek, Joachim, Dipl.-Ing.
Oedterstrasse 38c
D-4154 Tonisvorst 2(DE)**

Erfinder: **Bömer, Werner
Ziegeler Strasse 15
D-4050 Ratingen(DE)**
Erfinder: **Buchholz, Uwe, Dipl.-Ing.
Hanfweg 5
D-5000 Köln 41(DE)**

(74) Vertreter: **Müller, Gerd et al
Patentanwälte
HEMMERICH-MÜLLER-GROSSE-POLLMEIER--
MEY Hammerstrasse 2
D-5900 Siegen 1(DE)**

(54) **Manuell betätigbares Getriebe für Industriearmaturen, wie Schieber, Kugelhähne, Absperrklappen, Ventile o. dgl.**

(57) Es wird ein manuell betätigbares Getriebe für Industriearmaturen, wie Schieber, Kugelhähne, Absperrklappen, Ventile und dgl., beschrieben, bestehend aus einem mehrteiligen, ein Mittelteil (40) und zwei Seitenteile (18) umfassenden Getriebegehäuse, mit einem in dem einen Seitenteil angeordneten Durchbruch (20) zur Lagerung der Abtriebswelle und damit auch der einen Seite eines innerhalb des Gehäuses auf der Abtriebswelle angeordneten Zahnradsegmentes (26), Schneckenrades o. dgl., aus einer mit dem Zahnradsegment (26), Schneckenrad o. dgl. kämmenden Schnecke (38), die von zwei von der Wand (40) des Mittelteils nach außen vorspringenden Wandteilen (42, 44) gelagert wird, wobei zumindest ein Wandteil (42) einen Durchbruch (48) bildet, um eine Antriebswelle (52) durch diesen Durchbruch (48) hindurch zu führen, welche Antriebswelle (52) in einer axialen Bohrung (54) der Schnecke (38) drehfest aufnehmbar ist, und wobei das andere Seitenteil (18) ein Lager (30) in Form eines Durchbruchs oder in Form eines Sacklochlagerauges für die andere Seite (28) des Zahnradsegmentes (26) bildet. Erfindungsgemäß ist das eine Seitenteil mit dem Mittelteil einstückig aus Kunststoff gefertigt, verklebt, verschweißt oder verschraubt und bildet dadurch eine Gehäusewanne (40), die von

dem anderen, gleichfalls aus Kunststoff gefertigten Seitenteil (18) deckelartig verschließbar ist. Das Zahnradsegment (26), das Schneckenrad (38) oder entsprechende Verzahnungseinrichtungen stellen außerdem Kunststoffteile dar. Die Antriebs- und/oder Antriebswelle (22) bestehen ebenfalls aus Kunststoff oder aus Kunststoff mit eingelegter Verstärkungsseele mit einem kohle- und/oder glasfaserverstärktem Kunststoffkern oder aus einem Metallprofil, wie Profilstahl

Fig.3.

## Manuell betätigbares Getriebe für Industriearmaturen, wie Schieber, Kugelhähne, Absperrklappen, Ventile o. dgl.

Die Erfindung betrifft ein manuell betätigbares Getriebe für Industriearmaturen, wie Schieber, Kugelhähne, Absperrklappen, Ventile o. dgl., bestehend aus einem mehrteiligen, ein Mittelteil und zwei Seitenteile umfassenden Getriebegehäuse, mit einem in dem einen Seitenteil angeordneten Durchbruch zur Lagerung der Abtriebswelle (bzw. Armaturantriebswelle) und damit der einen Seite eines innerhalb des Gehäuses auf der Abtriebswelle angeordneten Zahnradsegmentes, Schneckenrades o. dgl., aus einer mit dem Zahnradsegment, Schneckenrad o. dgl. kämmenden Schnecke, die von zwei von der Mittelteilwand nach außen vorspringenden Wandteilen gelagert wird, wobei zumindest ein Wandteil einen Durchbruch bildet, um eine Antriebswelle durch diesen Durchbruch hindurch zu führen, welche Antriebswelle in einer axialen Bohrung der Schnecke o. dgl. drehfest aufnehmbar ist, wobei das andere Seitenteil ein Lager in Form eines Durchbruches oder in Form eines Sacklochauges für die andere Seite des Zahnradsegmentteils bildet.

Manuell betätigte Getriebe für Industriearmaturen, beispielsweise Schieber, Kugelhähne, Absperrklappen, Ventile, sind in vielfältiger Ausführungsform bereits seit langem bekannt. Diese werden bis heute stets aus metallischen Werkstoffen hergestellt, wobei lediglich einzelne Komponenten, wie z. B. Lagerbuchsen, Dichtungsscheiben und ähnliches aus Kunststoff gefertigt werden.

Es ist in anderen technischen Bereichen auch bekannt, Getriebeeinrichtungen einzusetzen, die vollständig aus Kunststoff bestehen. Dies gilt beispielsweise für die Großuhrenindustrie, die Automobilindustrie und die Elektrogeräteindustrie. Im Maschinenbau werden vorwiegend Buchsen, Gleitlager und Schnecken für Getriebe aus Kunststoff gefertigt.

Getriebe für Industriearmaturen bestanden bisher jedoch stets im wesentlichen aus Metall, weil man der Auffassung war, daß nur bei diesem Aufbau das Getriebe den rauhen Umweltbedingungen bei industriellen Anwendungen gewachsen ist.

Es hat sich aber gezeigt, daß bei Anwendungsfällen mit nur begrenzten Drehmomenten (bis Md = 690 Nm) durch besondere Formgebung und Bauteilzusammenstellung und Materialauswahl es gelingt, ein manuell betätigtes Getriebe für Industriearmaturen herzustellen, das im wesentlichen oder sogar vollständig aus Kunststoff besteht und daher bisher nicht ermöglichte Vorteile ergibt, wie beispielsweise Gewichtseinsparungen (z. B. statt 7,8 kg nur noch 1,2 kg), aber auch leichtere Herstellbarkeit mit weniger Bearbeitungsschritten und einfacherer Montage. Ein weiterer Vorteil ist, daß bei geeigneter Kunststoffwahl auch Wartungsfreiheit erreicht wird, da bisher benutztes Schmierfett entbehrlich wird und das Getriebe staubdicht gemacht werden kann. Infolge von besondere Eigenschaften der Kunststoffe lassen sich auch bisher notwendige Lagerbuchsen, Dichtungsscheiben und ähnliche Zusatzeinrichtungen vermeiden, die bisher erhebliche Kosten bei Herstellung, Aufbau und Wartung verursacht haben.

Erreicht werden diese Vorteile erfindungsgemäß dadurch, daß das eine Seitenteil mit dem Mittelteil einstückig aus Kunststoff gefertigt, verklebt, verschweißt oder verschraubt ist und eine Gehäusewanne bildet, die von dem anderen, gleichfalls aus Kunststoff gefertigten Seitenteil deckelartig verschließbar ist, daß weiterhin das Zahnradsegment, das Schneckenrad oder entsprechende Verzahnungseinrichtungen Kunststoffteile darstellen, und daß die Antriebs- und/oder die Abtriebswelle aus Kunststoff oder aus Kunststoff mit eingelegter Verstärkungsseele aus einem kohle- und/oder glasfaserverstärkten Kunststoffkern oder aus einem Metallprofil, wie profilstahl, besteht.

Auf diese Weise läßt sich eine erhebliche Gewichtsreduzierung erreichen, beispielsweise von einem bisherigen Gewicht von etwa 7 kg auf ein nunmehriges Gewicht von 1,2 kg.

Das Getriebegehäuse läßt sich infolge der Kunststoffausführung und der damit verbundenen Materialnachgiebigkeit ohne besondere Dichtungsmaßnahmen (z. B. Dichtungsblätter) staubdicht gestalten, z. B. durch konische Nut-Feder-Verbindungen, das Getriebe ist ohne Anwendung von Fett selbstschmierend ausgestaltbar. Es sind auch keine zusätzlichen Laufbuchsen notwendig, was Herstellung und Montage erheblich vereinfacht.

Es hat sich gezeigt, daß bei der hier in Rede stehenden besonderen Getriebeform es günstig ist, die Wanne und den Deckel aus einem Polyamidkunststoff mit Glasfaserverstärkung herzustellen. Das Zahnradsegment sollte aus Gründen besonders günstiger Schmiereigenschaften aus normalem Polyoximethylenpolymerisat bzw. aus Acetalcopolymerisat (POM) bestehen. Ein Kunststoff dieser Art wird im Handel z. B. unter der Bezeichnung "Hostaform" von der Fa. Hoechst angeboten. Die Schnecke sollte ebenfalls aus POM oder alternativ aus Polyamid bestehen.

Als Werkstoff kann bei besonders hohen mechanischen Belastun gen auch kohle- und/oder glasfaserverstärkter Verbundkunststoffwerkstoff verwendet werden, wodurch die Festigkeit von Metall erreicht und u. U. sogar überschritten werden kann.

Die Oberfläche der Kunststoffteile könnten metallisiert werden, insbesondere ist im Bereich der Lebensmittelindustrie eine Verchromung und im Bereich der chemischen Industrie eine Vernickelung oder sonstige Oberflächenvergütung u. U. zweckmäßig. Die Antriebswelle sollte ebenfalls vorzugsweise aus hochmolekularem Acetalcopolymerisat (POM) gefertigt werden, oder auch aus Stahl, aus POM mit Stahlkern oder Glasfaserkern.

Wird der Antrieb von einem auf die Antriebswelle aufgesetzten Handrad oder auch aus einem Kettenrad gebildet, ist es zweckmäßig, das Handrad bzw. das Kettenrad ebenfalls aus einem Kunststoff wie hochmolekularem POM oder Polyamid herzustellen. Beim Handrad hat dies den weiteren Vorteil, daß sich das Handrad besonders in kalter Umgebung angenehmer anfassen läßt (geringere Wärmeleitfähigkeit von Kunststoff gegenüber Metall), beim Kettenrad ist ein besonderer Vorteil in der Tatsache zu sehen, daß bei Betätigung des Kettenrades mit einer Kette ein aus Kunststoff bestehendes Kettenrad weniger Betriebsgeräusche erzeugt.

In beiden Fällen ist auch von Bedeutung, daß durch die Gewichtsersparnis die auf das Getriebe einwirkende Hebelkraft sich verringert, so daß die notwendigen Befestigungseinrichtungen für das Getriebe kleiner dimensioniert werden können. Dies gilt insbesondere in den Fällen, in denen über lange Hebelarme das Gewicht von Kettenrad oder auch Handrad ein großes Biegemoment erzeugt.

Manchmal ist es günstig, der Gehäuseaußenwand um die Antriebswelle herum einen Flansch mit in gleichen Radialabständen von der Wellenachse nahe dem Umfang verteilt angeordneten Durchbrüche vorzusehen, und die Antriebswelle mit einer mit dem Flansch sich erstreckende, auf der Welle drehfest montierte Scheibe mit in gleichem Radialabstand angeordneten, bei bestimmten Drehwinkeln zu den Flanschdurchbrüchen fluchtenden Durchbrüchen, um so die Antriebswelle bezüglich des Gehäuses mit Hilfe eines Durchsteckschlosses "abschließbar" zu machen. Um auch hier Gewichtseinsparungen zu erreichen und das Durchstecken des Bügels des Schlosses erleichtern zu können, ist es günstig, Flansch und Scheibe aus einem Kunststoff zu fertigen, insbesondere aus hochmolekularem POM.

Wanne und Deckel (oder auch Mittelteil und Seitenteile) können nach Einsetzen der entsprechenden Bauteile miteinander dicht verklebt werden, falls spätere Wartung, beispielsweise hier der Austausch von Schmierfett, nicht erforderlich ist. Andernfalls wäre auch eine staubdichte Verschraubung mittels z. B. konischer Nut-Feder-Verbindung möglich.

Räder und Schnecke können mit den zugehörigen Achsen oder Wellen über Spannstifte oder Spannhülsen miteinander verbunden sein, die die Achse oder Welle sowie das Rad bzw. die Schnecke oder einen von diesem Rad oder dieser Schnecke ausgehenden, die Achse oder Welle umgreifenden Ansatz durchdringen.

Es ist aber auch möglich, Paßfeder-, Vierkantwellen-, Vielkeilwellen- oder Rändelungsverbindungen vorzusehen, wobei z. B. die Deutsche Norm DIN 3337 angewendet werden könnte.

Die Erfindung wird nachfolgend anhand eines Ausführungsbeispiels näher erläutert, wobei auf die Figuren Bezug genommen wird.

Es zeigt:

Fig. 1 in einer Seitenansicht ein Getriebe für einen Schieber, einen Kugelhahn, eine Klappe oder ein Ventil mit wahlweise Handradantrieb oder Kettenradantrieb;

Fig. 2 eine Ansicht von oben auf das Getriebe der Fig. 1; und

Fig. 3 eine Explosionsdarstellung des Getriebes der Fig. 1.

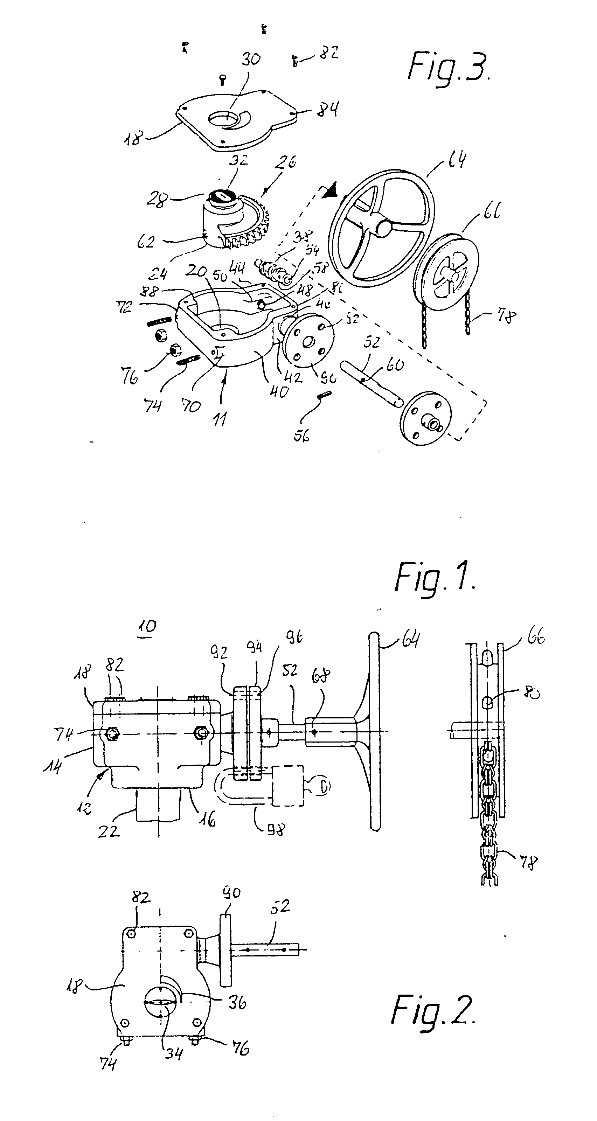

In Fig. 1 ist ein erfindungsgemäß manuell betätigtes Getriebe 10 für Industriearmaturen, wie Schieber, Kugelhähne, Klappen, Ventile o. dgl. dargestellt, bestehend aus einem Getriebegehäuse 12 mit einem Mittelteil 14 und zwei Seitenteilen 16, 18. In dem Seitenteil 16, das mit dem Mittelteil 14 einstückig sein kann, befindet sich ein Durchbruch 20 (siehe Fig. 3) zur Hindurchführung und Lagerung der Abtriebswelle 22 (die vorzugsweise identisch ist mit der Antriebswelle der Armatur) und damit auch zur Lagerung der einen Seite 24 eines innerhalb des Gehäuses 12 auf der Abtriebswelle 22 angeordneten Zahnradsegmentes 26, dessen anderes Ende 28 im Seitenteil 18 gelagert ist, beispielsweise in einer in der inneren Deckelwand angeordneten entsprechenden Einsenkung oder auch in einem, wie in Fig. 3 dargestellt ist, Durchbruch 30, wobei dieser Durchbruch das Stirnende 32 sowie eine entsprechende auf diesem Stirnende angeordnete Markierung nach außen hin sichtbar werden läßt, um so z. B. eine Anzeige für die Stellung der Klappe der Armatur zu liefern, siehe die Seitenansicht der Fig. 2, wo die Markierung 34 auf dem Zahnradsegmentstirnende mit einer entsprechenden Markierung 36 auf dem Seitenteil 18 des Gehäuses 12 zusammenarbeitet, um anzuzeigen, ob die von der Abtriebswelle 22 betätigte Klappe offen oder geschlossen ist.

Mit dem Zahnradsegment 26 kämmt eine Schnecke 38, die von zwei von der Mittelteilwand 40 nach außen vorspringenden Wandteilen 42, 44 in entsprechenden Einsenkungen oder Lageraugen 48 bzw. Lagerdurchbruch 46 gelagert ist. Zur Stabilitätserhöhung kann es günstig sein, an geeigneten Stellen Verstärkungssicken 50 im Gehäusemittelteil vorzusehen.

Als Werkstoff für das eine Seitenteil 16 und das Mittelteil 14, die gemeinsam einstückig eine Gehäusewanne 11 bilden, hat sich Polyamidkunststoff bewährt. Auch das Seitenteil 18, das einen Deckel für die Wanne 11 darstellt, kann aus diesem Kunststoff bestehen. Demgegenüber wird man vorzugsweise die Schnecke 38 aus einem Polyoximethylen (POM) oder Polyamid und das Zahnradsegment 26 aus POM herstellen.

Es ist günstig, auch die Abtriebswelle 22 sowie eine Antriebswelle 52 aus Kunststoff zu fertigen, ggf. zur Erhöhung der Drehmomentübertragungsfähigkeit bei der getrennt hergestellten Antriebswelle durch eine axial angeordnete Seele aus einem kohle- oder glasfaserverstärkten Kunststoffkern oder auch aus einem Metallprofilkern, wie beispielsweise Stahlprofil, verstärkt. Diese Seele kann wiederum von Kunststoff umspritzt sein, was die Gleiteigenschaften innerhalb des von den Gehäuseteilen gebildeten Lagerflächen verbessert, wobei wiederum als Kunststoff POM hier für die Welle bzw. die Wellenoberfläche sich als besonders günstig erwiesen hat.

Zum Antrieb dient die bereits erwähnte Antriebswelle 52, die grundsätzlich mit der Schnecke 38 einstückig gefertigt sein kann, zur Montageerleichterung und zur leichteren Auswechselbarkeit (Anpassung an verschiedene Anwendungsfälle mit unterschiedlichem Handradabstand oder Kettenradabstand) ist es jedoch günstiger, das Schneckenrad 38 mit einem axialen Durchbruch 54 zu versehen, in den die Welle 52 genau hineinpaßt. Dann kann die Schnecke 38 auch ohne Probleme in den zugehörigen, von den Wandteilen 42, 44 gebildeten Ausbuchtungsteil der Wanne 11 in die zugehörigen Lageraugen bzw. Durchbrüche 46, 48 eingelegt und anschließend die Welle 52 durch den Durchbruch (z. B. 46) hindurch in die Bohrung 54 eingesteckt und die Welle 52 mit der Schnecke 38 starr verbunden werden, beispielsweise durch Verkleben oder auch durch Anwendung eines Stiftes, wie Spannstiftes 56, der in eine seitliche Radialbohrung 58 der Schnecke, wie auch die Welle 52 eingeschoben ist (eine entsprechende Drehsicherung könnte auch in der Abtriebswelle 22 sowie dem Zahnradsegment 24 vorgesehen sein, siehe Bezugszahl 62). Eine Drehsicherung kann auch durch eine Paßfeder, Verwendung einer Vierkantwelle, einer Vielkeilwelle oder einer Rändelung auf einer Stahlwelle, die in eine Bohrung in einem Kunststoffteil eingepreßt wird, gebildet sein. Auf das aus dem Gehäuse 12 herausragende Ende der Antriebswelle 52 kann dann ein Handrad 64 oder auch ein Kettenrad 66 aufgesteckt und entweder wiederum verklebt, verstiftet oder anderweitig drehgesichert werden, siehe Bezugszahl 68 in Fig. 1.

Die besonders stark belasteten Teile des Gehäuses, beispielsweise sind das die Lagerbereiche für die beiden Wellen, Befestigungspunkte, mit denen das Getriebe später an der Armatur befestigt werden kann, können durch Kohlefasern oder Glasfasern oder durch metallische Gewindeeinsätze, die in den Kunststoff eingelegt sind, verstärkt werden. Durch entsprechende Ausrichtung dieser Fasern ergibt sich eine sehr hohe Zugfestigkeit in der jeweiligen Belastungsrichtung. Diese Festigkeit kann so hoch sein, daß ein Gewinde in ein entsprechendes Auge, wie es bei 70, 72 dargestellt ist, des Gehäusemittelteils direkt eingeschnitten werden kann. In dieses Gewinde kann dann ein Schraubbolzen 74 eingedreht werden, auf den dann später eine entsprechende Mutter 76 als Zwischenlage (Fig. 2) oder auch als Befestigungsmittel aufgesetzt werden kann. Diese Schrauben dienen innerhalb des Gehäuses als Anschläge für das Zahnradsegment 62 und bewirken definierte Endstellungen für die Klappe o. dgl., bei ihrer Bewegung zwischen zwei z. B. um 90 Winkelgrade versetzte Endlagen (Offen - Geschlossen).

In der Lebensmittelindustrie ist es meistens günstig, den Oberflächen der benutzten Einrichtungen eine Chrommetallisierung zu geben, was den Bakterienansatz verringert, die Reinigung erleichtert, den optischen Eindruck verbessert und auch eine elektrische Erdung der Oberfläche des Getriebes möglich macht, insbesondere in den Fällen, in denen Kunststoffe verwendet werden, die selbst wenig Leitfähigkeit zeigen. Eine Erdung des Getriebes insgesamt läßt sich über metallische Schrauben, die z. B. zur Deckelbefestigung dienen, erreichen. In anderen Anwendungsfällen ist auch Verzinkung oder eine Vergoldung sinnvoll, insbesondere dann, wenn das Getriebe in Umgebungen eingesetzt werden soll, wo Chemikalien auftreten, die die Kunststoffmaterialien möglicherweise angreifen, nicht jedoch das sehr widerstandsfähige Gold.

Das Handrad 64, das zweckmäßigerweise ebenfalls aus Kunststoff besteht, beispielsweise aus POM oder Polyamid, hat gegenüber einem Handrad aus Metall, beispielsweise einem aus Blech gestanzten Handrad, den Vorteil der angenehmeren Handhabung: Kunststoff leitet die Wärme wesentlich schlechter als Metall, so daß das Handrad sich wesentlich wärmer anfühlt als es bei einem Metallhandrad der Fall wäre.

Ein aus Kunststoff hergestelltes Kettenrad 66 hat gegenüber einem Metallkettenrad den Vorteil, daß bei Bewegung der Kette 78 über die Kettenzähne 80 des Kettenrades 66 weniger Geräusch entsteht, als es bei einem Kettenrad aus Metall der Fall ist.

Bei der in Fig. 3 dargestellten Ausführungsform wird nach Montage von Schnecke 38 und Zahnradsegment 26 sowie Einstecken der Abtriebswelle 22 und der Antriebswelle 52 und entsprechende Fixierung, beispielsweise durch Verkleben oder durch Verstiften (Bezugszahlen 62, 58, 60), verkeilen oder mittels Rändeln der Deckel 18 auf die Gehäusewanne aufgesetzt und beispielsweise mittels Selbstschneideschrauben 82 (in der Elektroindustrie üblich), die durch Bohrungen 84 hindurchgesteckt und in entsprechende Gewindelöcher 86 im Wannenrand 88 angeordnet sind, befestigt. Alternativ kann auch der

Deckel auf den Wannenrand 88 aufgeklebt oder aber auch durch konische Nut- und Federverbindung dicht aufgesetzt werden. Durch die federnden Eigenschaften der verwendeten Kunststoffe einerseits ergibt sich ausreichende Dichtheit, insbesondere Staubdichtheit gemäß IP 65 (nach Deutscher Industrienorm) auch ohne Zwischenlage eines Dichtungsblattes, bei Verklebung ergibt sich die Dichtheit durch die Klebematerialien. Soll aus besonderen Gründen besonders hohe Dichtheit, beispielsweise Druckdichtheit erreicht werden, können selbstverständlich zusätzliche Maßnahmen ergriffen werden, wie Zwischenlage eines Dichtungsblattes, oder auch Dichtungsmanschetten an den Durchbrüchen.

In den Figuren ist noch ein weiteres Bauteil zu erkennen, nämlich ein an der Gehäuseaußenwand um die Antriebswelle 52 herum angeordneter Flansch in Richtung 90, der ebenfalls mit dem Gehäusemittelteil in einem Arbeitsgang hergestellt (beispielsweise durch Spritzgußverfahren) sein kann, welcher Flansch mit in gleichen Radialabständen von der Achse der Welle 52 im Umfang verteilte Durchbrüche 92 aufweist. Gleichzeitig ist auf der Antriebswelle 52 eine sich wie der Flansch 90 erstreckende Scheibe 94 vorgesehen, die mit entsprechenden Durchbrüchen 96 versehen ist, die in gleichem Radialabstand angeordnet und bei bestimmten Drehwinkeln zu den Flanschdurchbrüchen fluchtend angeordnet sind. Auf diese Weise läßt sich bei bestimmten Drehwinkeln durch die beiden Durchbrüche 92, 96 ein Verriegelungsschloß 98 in an sich bekannter Weise hindurchstekken und so die Stellung der von dem Getriebe l0 betätigten Ventilklappe sichern.

## Ansprüche

1. Manuell betätigtes Getriebe (10) für Industriearmaturen, wie Schieber, Kugelhähne, Absperrklappen, Ventile o. dgl., bestehend aus einem mehrteiligen, ein Mittelteil (14) und zwei Seitenteile (16, 18) umfassenden Getriebegehäuse (12), mit einem in dem einen Seitenteil (16) angeordneten Durchbruch zur Lagerung der Abtriebswelle (22) und damit auf der einen Seite (24) eines innerhalb des Gehäuses (12) auf der Abtriebswelle (22) angeordneten Zahnradsegmentes (26), Schneckenrades o. dgl., aus einer mit dem Zahnradsegment (26), Schneckenrad o. dgl., kämmenden Schnecke (38), die von zwei von dem Mittelteilwand (40) nach außen vorspringenden Wandteilen (42, 44) gelagert wird, wobei zumindest ein Wandteil (42) einen Durchbruch (48) bildet, um eine Antriebswelle (52) durch diesen Durchbruch (48) hindurchzuführen, welche Antriebswelle (52) in einer axialen Bohrung (54) der Schnecke (38) drehfest aufnehmbar ist, wobei das andere Seitenteil (18) ein Lager (30) in Form eines Durchbruchs oder in Form eines Sacklochlagerauges für die andere Seite (28) des Zahnradsegmentes (26) bildet, dadurch gekennzeichnet, daß das eine Seitenteil (16) mit dem Mittelteil (14) einstückig aus Kunststoff gefertigt, verklebt, verschweißt oder verschraubt ist und eine Gehäusewanne bildet, die von dem anderen, gleichfalls aus Kunststoff gefertigten Seitenteil (18) deckelartig verschließbar ist, daß das Zahnradsegment (26), das Schneckenrad (38) oder entsprechende Verzahnungseinrichtungen Kunststoffteile darstellen, und daß die Antriebs- (52) und/oder die Abtriebswelle (22) aus Kunststoff oder aus Kunststoff mit eingelegter Verstärkungsseele mit einem kohle- und/oder glasfaserverstärkten Kunststoffkern oder aus einem Metallprofil, wie profilstahl besteht.

2. Getriebe nach Anspruch 1, dadurch gekennzeichnet, daß die Wanne (14, 16) und der Deckel (18) aus einem Polyamidkunststoff besteht.

3. Getriebe nach Anspruch 1 oder 2, dadurch gekennzeichnet, daß die Schnecke (38) aus Polyamid oder aus POM und daß das Zahnradsegment (26) aus POM besteht.

4. Getriebe nach einem der Ansprüche 1 bis 3, dadurch gekennzeichnet, daß als Werkstoff glas- und/oder kohlefaserverstärkter Kunststoff verwendet wird.

5. Getriebe nach einem der Ansprüche 1 bis 4, dadurch gekennzeichnet, daß die Oberflächen der Kunststoffteile metallisiert, insbesondere vernickelt, verchromt oder mit anderen Oberflächenveredelungen versehen sind.

6. Getriebe nach einem der Ansprüche 1 bis 5, dadurch gekennzeichnet, daß der die Antriebswelle aus hochmolekularem POM, aus mit Kohlefasern verstärktem POM, oder aus Stahl, oder aus POM mit Stahlkern oder Glasfaserkern besteht.

7. Getriebe nach einem der Ansprüche 1 bis 6, wobei der Antrieb von einem auf die Antriebswelle (52) aufgesetzten Handrad (64) oder Kettenrad (66) gebildet wird, dadurch gekennzeichnet, daß das Handrad (64) bzw. Kettenrad (66) aus Kunststoff wie hochmolekularem POM oder Polyamid besteht.

8. Getriebe nach einem der Ansprüche 1 bis 7. wobei die Gehäuseaußenwand um die Antriebswelle (52) herum einen Flansch (90) mit in gleichem Radialabstand von der Wellenachse nahe dem Umfang verteilte angeordneten Durchbrüchen (92) und die Antriebswelle (52) eine mit dem Flansch (90) sich erstreckende, auf der Welle (52) drehfest montierte Scheibe (94) mit in gleichem Radialabstand angeordneten, bei bestimmten Drehwinkeln zum Flansch (90) fluchtenden Durchbrüchen (96) aufweist, dadurch gekennzeichnet, daß die Scheibe (94) aus Kunststoff wie hochmolekularem POM besteht, während der Flansch (90) am Gehäuse angegossen ist und aus dem Material des Gehäuses, insbesondere Polyamid, besteht.

9. Getriebe nach einem der Ansprüche 1 bis 8, dadurch gekennzeichnet, daß Gehäusewanne (14, 16) und Gehäusedeckel (18) miteinander dicht verklebt sind oder mittels z. B. konischer Nut-Feder-Verbindung staubdicht verschraubt sind.

10. Getriebe nach einem der Ansprüche 1 bis 9, dadurch gekennzeichnet, daß Räder (26; 64; 66) und Schnecke (38) mit den zugehörigen Achsen oder Wellen (22; 52) über Spannstifte (56) oder Spannhülsen miteinander drehfest verbunden sind, die die Achse oder Welle und das Rad oder Schnecke oder einen von diesem Rad oder dieser Schnecke ausgehenden, die Achse oder Welle umgreifenden Ansatz durchdringen.

11. Getriebe nach Anspruch 10, dadurch gekennzeichnet, daß, insbesondere für die Verbindung zwischen Schnecke (38) und zugehöriger Antriebswelle (52) sowie zwischen Zahnradsegment (26) und zugehöriger Antriebswelle (22), wie insbesondere die vom Schieber, Kugelhahn, Absperrklappe, Ventil o. dgl. ausgehende Antriebswelle eine Paßfeder, Vierkantwellen- oder Rändelungsverbindung vorgesehen ist.

12. Getriebe nach einem der Ansprüche 1 bis 11, dadurch gekennzeichnet, daß Mittelteil (14) und Seitenteile (16, 18) bzw. Gehäusewanne und Gehäusedeckel (18) mit Lippendichtung für staubdichten Abschluß versehen sind.

13. Getriebe nach einem der Ansprüche 1 bis 12, dadurch gekennzeichnet, daß dem Sonnen- oder UV-Licht ausgesetzte Kunststoffteile aus UV-beständigem, insbesondere Pigmentstoffe enthaltendem Kunststoff bestehen.

14. Getriebe nach einem der Ansprüche 1 bis 13, dadurch gekennzeichnet, daß die Verzahnung des aus Kunststoff bestehenden Zahnradsegmentes bzw. Schneckenrades sowie der Schnecke derartig ist, daß das Getriebe selbsthemmend wird.

Fig.3.

Fig.1.

Fig.2.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-2 133 237  (LIMITORQUE GmbH) <br> * Seite 6, Zeile 23 - Seite 7, Zeile 15 * <br> --- | 1 | F 16 K  31/53 |
| Y | FR-A-2 582 381  (E. CAMBIER) <br> * Seite 9, Zeilen 2-7; Seite 10, Zeilen 18-23; Seite 11, Zeilen 6-10 * <br> --- | 1 | |
| A | DE-A-2 142 797  (SIEMENS AG) <br> * Anspruch 1 * <br> --- | 1 | |
| A | ENGINEERING, Band 225, Nr. 4, April 1985, Seite 224, London, GB; <br> "All-plastics gearbox keeps down the C5's weight" <br> * Seite 224, linke Spalte, Absatz 3 * <br> --- | | |
| A | US-A-4 058 288  (GENERAL SIGNAL CORP.) <br> --- | | |
| A | US-A-4 007 910  (KUBOTA LTD) <br> --- | | |
| A | US-A-3 395 886  (H. PRATT CO.) <br> ----- | | |

**RECHERCHIERTE SACHGEBIETE (Int. Cl.5)**

F 16 K   31/00
F 16 K    1/00
F 16 H

Der vorliegende Recherchenbericht wurde für alle Patentansprüche erstellt

| Recherchenort | Abschlußdatum der Recherche | Prüfer |
|---|---|---|
| DEN HAAG | 28-09-1989 | DE SMET F.P. |